(19) **Europäisches Patentamt / European Patent Office / Office européen des brevets**

(11) **EP 3 402 265 A1**

(12) # EUROPEAN PATENT APPLICATION
published in accordance with Art. 153(4) EPC

(43) Date of publication:
**14.11.2018 Bulletin 2018/46**

(21) Application number: **16881139.6**

(22) Date of filing: **26.12.2016**

(51) Int Cl.:
***H04W 72/04*** (2009.01)

(86) International application number:
**PCT/CN2016/112067**

(87) International publication number:
**WO 2017/114350 (06.07.2017 Gazette 2017/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **28.12.2015 CN 201511000932**

(71) Applicant: **Sharp Kabushiki Kaisha
Sakai City, Osaka 590-8522 (JP)**

(72) Inventors:
- **LIU, Renmao**
  **Shanghai 201206 (CN)**
- **ZHANG, Meng**
  **Shanghai 201206 (CN)**

(74) Representative: **Müller Hoffmann & Partner
Patentanwälte mbB
St.-Martin-Strasse 58
81541 München (DE)**

(54) **MULTIPLEXING METHOD FOR NARROWBAND INTERNET OF THINGS PHYSICAL DOWNLINK CHANNEL, AND BASE STATION AND USER EQUIPMENT**

(57) Embodiments of the present disclosure provide a multiplex transmission method for narrowband Internet of Things physical downlink channels, and a corresponding base station and user equipment for executing the method. The base station according to the embodiments of the present disclosure comprises a mapping unit, configured to multiplex more than one narrowband Internet of Things physical downlink channel in the same subframe, wherein the narrowband Internet of Things physical downlink channels comprise narrowband Internet of Things physical downlink control channels (NB-PDCCHs) and/or narrowband Internet of Things physical downlink shared channels (NB-PDSCHs), a minimum granularity for resource allocation of the narrowband Internet of Things physical downlink channels is in a unit of an enhanced resource element group (EREG), and the EREG is composed of multiple resource elements defined in two dimensions of time and frequency in the same subframe; and a transmitting unit, configured to transmit a downlink subframe.

| | | | | | | | | | | | | |
|---|---|---|---|---|---|---|---|---|---|---|---|---|
| 11 | 7 | 3 | 15 | 11 | | | 3 | 15 | 11 | 7 | 3 | |
| 10 | 6 | 2 | 14 | 10 | 3 | 2 | 2 | 14 | 10 | 6 | 2 | 1 0 |
| 9 | 5 | 1 | 13 | 9 | 1 | 7 | 1 | 13 | 9 | 5 | 1 | 9 | 15 |
| 8 | 4 | 0 | 12 | 8 | 0 | 6 | 0 | 12 | 8 | 4 | 0 | 8 | 14 |
| 7 | 3 | 15 | 11 | 7 | 15 | 5 | 15 | 11 | 7 | 3 | 15 | 7 | 13 |
| 6 | 2 | 14 | 10 | 6 | | | 14 | 10 | 6 | 2 | 14 | |
| 5 | 1 | 13 | 9 | 5 | 7 | 6 | 13 | 9 | 5 | 1 | 13 | 5 | 4 |
| 4 | 0 | 12 | 8 | 4 | 14 | 4 | 12 | 8 | 4 | 0 | 12 | 6 | 12 |
| 3 | 15 | 11 | 7 | 3 | 13 | 3 | 11 | 7 | 3 | 15 | 11 | 5 | 11 |
| 2 | 14 | 10 | 6 | 2 | 12 | 2 | 10 | 6 | 2 | 14 | 10 | 4 | 10 |
| 1 | 13 | 9 | 5 | 1 | | | 9 | 5 | 1 | 13 | 9 | |
| 0 | 12 | 8 | 4 | 0 | 11 | 10 | 8 | 4 | 0 | 12 | 8 | 9 | 8 |

▓ Resource elements for transmitting demodulation reference signals on antenna ports P (207,208,209, and 210)
▨ Redefined resource elements for transmitting NB–PDSCHs

FIG.8

**EP 3 402 265 A1**

**Description**

Technical Field

The present invention relates to the field of wireless communication technology. More specifically, the present disclosure relates to a multiplexing method for physical downlink channels, a configuration method for a reference signal antenna port for physical downlink channel demodulation, a base station, and a user equipment.

Background

With the rapid growth of mobile communication and great progress of technology, the world will move towards a fully interconnected network society where anyone or any device can acquire information and share data anytime and anywhere. It is estimated that there will be 50 billion interconnected equipments by 2020, of which only about 10 billion may be mobile phones and tablet computers. The rest are not machines communicating with human beings but machines communicating with one another. Therefore, how to design a system to better support the Internet of Everything is a subject needing further and intensive study.

In the standard of Long Term Evolution (LTE) of the Third Generation Partnership Project (3GPP), machine-to-machine communication is called machine type communication (MTC). MTC is a data communication service that does not require human participation. Deployment of large-scale MTC user equipments can be used in such fields as security, tracking, billing, measurement and consumer electronics, and specifically relates applications, including video monitoring, supply chain tracking, intelligent meter reading, and remote monitoring. MTC requires lower power consumption and supports lower data transmission rate and lower mobility. The current LTE system is mainly for man-to-man communication services. The key to achieving the competitive scale advantages and application prospects of MTC services is that the LTE network supports low-cost MTC equipments.

In addition, some MTC user equipments need to be installed in the basement of a residential building or at a position within the protection of an insulating foil, a metal window or a thick wall of a traditional building; as compared with the conventional equipment terminals (such as mobile phones and tablet computers) in LTE networks, the air interfaces of MTC user equipment will obviously suffer from more serious penetration losses. 3GPP decides to study the project design and performance evaluation of MTC equipments with enhanced additional 20 dB coverage. It should be noted that MTC equipments located at poor network coverage areas have the following characteristics: extremely low data transmission rates, low latency requirements, and limited mobility. In view of the above characteristics of MTC, the LTE network can further optimize some signals and/or channels to better support MTC services.

Therefore, at the 3GPP RAN # 64 general conference held in June 2014, a new Rel-13-oriented work item of MTC with low complexity and coverage enhancement was proposed (see Non-Patent Document: RP-140990 New Work Item on Even Lower Complexity and Enhanced Coverage LTE UE for MTC, Ericsson, NSN). In the description of this work item, the LTE Rel-13 system needs to support MTC user equipment having uplink/downlink 1.4 MHz RF bandwidth to operate at any system bandwidth (e.g., 1.4 MHz, 3 MHz, 5 MHz, 10 MHz, 15 MHz, 20 MHz, and the like). The standardization of the work item would be completed at the end of 2015.

In addition, in order to better implement the Internet of Everything, another new work item was proposed at the 3GPP RAN # 69 general meeting held in September 2015 (see Non-Patent Document: RP-151621 New Work Item: NarrowBand IoT (NB -IoT)), which we refer to as Narrowband Internet of Things (NB-IoT). In the description of this item, an NB-IoT user equipment (UE) will support uplink/downlink 180 KHz RF bandwidth.

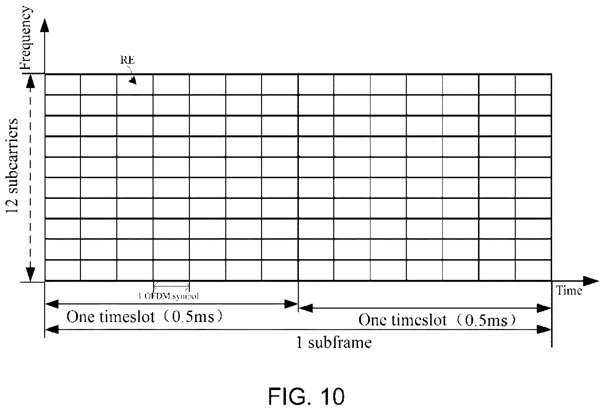

The LTE downlink transmission is based on orthogonal frequency division multiplexing (OFDM). In the LTE system, one radio frame is divided into 10 subframes (#0 to #9). Each subframe may include, for example, 2 timeslots of equal size having a length of 0.5 ms in the time domain, and may include, for example, 12 subcarriers in the frequency domain. Each timeslot includes 7 orthogonal frequency division multiplexing (OFDM) symbols. The OFDM symbols in time and the subcarriers in frequency may be used together for defining resource elements (REs), like time-frequency grids shown in FIG. 10. Each RE corresponds to one subcarrier during an interval of one OFDM symbol. A physical resource block (PRB for short) is also defined in the LTE, where each PRB is composed of 12 consecutive subcarriers during one timeslot. Then, one subframe includes a pair of physical resource blocks, which is also called a physical resource block pair.

In the existing LTE system, a minimum granularity for resource allocation of the UE is one physical resource block or physical resource block pair. That is to say, in the same subframe, multiplexing between multiple physical downlink shared channels (PDSCHs), or multiplexing between a PDSCH and an enhanced physical downlink control channel (EPDCCH) is based on a PRB (or a PRB pair). However, the NB-IoT UE supports uplink/downlink 180 kHz RF bandwidth only, i.e., RF bandwidth having the size of one PRB (or PRB pair). Therefore, the PRB (or PRB pair)-based multiplexing mechanism is not applicable to the NB-IoT. Therefore, a new downlink channel multiplexing mechanism applicable to the NB-IoT and a mechanism indicating relevant information of a reference signal antenna port for physical downlink channel demodulation is needed.

Summary of Invention

Embodiments of the present disclosure provide a new downlink channel multiplexing mechanism applicable to the NB-IoT and provide a mechanism indicating a reference signal antenna port for physical downlink channel demodulation.

According to a first aspect of the present disclosure, a base station is provided, comprising: a mapping unit, configured to multiplex more than one narrowband Internet of Things physical downlink channel in the same subframe, wherein the narrowband Internet of Things physical downlink channels comprise narrowband Internet of Things physical downlink control channels (NB-PDCCHs) and/or narrowband Internet of Things physical downlink shared channels (NB-PDSCHs), a minimum granularity for resource allocation of the narrowband Internet of Things physical downlink channels is in a unit of an enhanced resource element group (EREG), and the EREG is composed of multiple resource elements defined in two dimensions of time and frequency in the same subframe; and a transmitting unit, configured to transmit a downlink subframe.

According to a second aspect of the present disclosure, a method executed in a base station is provided, the method comprising: multiplexing more than one narrowband Internet of Things physical downlink channel in the same subframe, wherein the physical downlink channels include NB-PDCCHs and/or NB-PDSCHs, a minimum granularity for resource allocation of the narrowband Internet of Things physical downlink channels is in a unit of an EREG, and the EREG is composed of multiple resource elements defined in two dimensions of time and frequency in the same subframe; and transmitting the downlink subframe.

According to a third aspect of the present disclosure, a user equipment is provided, comprising: a receiving unit, configured to receive a downlink subframe, wherein more than one narrowband Internet of Things physical downlink channel is multiplexed in the subframe, the narrowband Internet of Things physical downlink channels comprise NB-PDCCHs and/or NB-PDSCHs, a minimum granularity for resource allocation of the narrowband Internet of Things physical downlink channels is in a unit of an EREG, and the EREG is composed of multiple resource elements defined in two dimensions of time and frequency in the same subframe; and a demapping unit, configured to extract, from the received downlink subframe, a narrowband Internet of Things physical downlink channel for the user equipment.

According to a fourth aspect of the present disclosure, a method executed in a user equipment is provided, the method comprising: receiving a downlink subframe, wherein more than one narrowband Internet of Things physical downlink channel is multiplexed in the subframe, the narrowband Internet of Things physical downlink channels comprise NB-PDCCHs and/or NB-PDSCHs, a minimum granularity for resource allocation of the narrowband Internet of Things physical downlink channels is in a unit of an EREG, and the EREG is composed of multiple resource elements defined in two dimensions of time and frequency in the same subframe; and extracting,, from the received downlink subframe, a narrowband Internet of Things physical downlink channel for the user equipment.

In the embodiments of the present disclosure, one NB-PDCCH is composed of one or more enhanced control channel elements "ECCEs", and each ECCE is mapped to one or more EREGs; and/or one NB-PDSCH is composed of one or more enhanced shared channel elements (ESCEs), and each ESCE is mapped to one or more EREGs.

One subframe includes 16 EREGs, which is consistent with the definition in the existing 3GPP TS 36.211 V11.3.0 (2013-06) specification.

In some embodiments of the present disclosure, both an NB-PDSCH and an NB-PDCCH are multiplexed in the same subframe.

However, in some other embodiments of the present disclosure, more than one NB-PDSCH is multiplexed and no NB-PDCCH is multiplexed in the same subframe.

In some embodiments of the present disclosure, a demodulation reference signal antenna port for narrowband Internet of Things physical downlink channel (NB-PDCCH and/or NB-PDSCH) demodulation is indicated in an implicit manner. For example, a number of a first ECCE in all ECCEs occupied by a to-be-demodulated NB-PDCCH may be used for implicit indication, or a number of a first ESCE in all ESCEs occupied by a to-be-demodulated NB-PDSCH may be used for implicit indication. Alternatively, a C-RNTI of a user equipment corresponding to the to-be-demodulated NB-PDCCH or NB-PDSCH may be used for implicit indication.

In some other embodiments of the present disclosure, a demodulation reference signal antenna port for narrowband Internet of Things physical downlink channel (NB-PDCCH and/or NB-PDSCH) demodulation is indicated in an explicit manner. For example, downlink control information (DCI) or radio resource control (RRC) signaling may be used for explicit indication.

Brief Description of Drawings

The above and other features of the present disclosure will become more apparent with the following detailed description in conjunction with the accompanying drawings.

FIG. 1 is a block diagram of a base station according to an embodiment of the present disclosure.

FIG. 2 is a block diagram of a user equipment according to an embodiment of the present disclosure.

FIG. 3 is a schematic diagram illustrating multiplexing of an NB-PDCCH and an NB-PDSCH based on an enhanced channel element (ECE) in the same subframe according to a first embodiment of the present disclosure, where one ECE is mapped to 4 EREGs.

FIG. 4 is a schematic diagram of 4 antenna ports for NB-PDCCH and NB-PDSCH demodulation according to the first embodiment of the present disclosure.

FIG. 5 is a schematic diagram illustrating multiplexing of an NB-PDCCH and an NB-PDSCH based on an ECE in the same subframe according to a second embodiment of the present disclosure, where one ECE is mapped to 2 EREGs.

FIG. 6 is a schematic diagram of 8 antenna ports for NB-PDSCH and/or NB-PDCCH demodulation according to the second embodiment of the present disclosure.

FIG. 7 is a schematic diagram illustrating multiplexing of multiple NB-PDSCHs based on an EREG in the same subframe according to a third embodiment of the present disclosure, where the number of the multiplexed NB-PDSCHs is greater than 4 but less than or equal to 8.

FIG. 8 is a schematic diagram illustrating multiplexing of multiple NB-PDSCHs based on an EREG in the same subframe according to a fourth embodiment of the present disclosure, where the number of the multiplexed NB-PDSCHs is less than or equal to 4.

FIG. 9 is a schematic diagram of 4 antenna ports for NB-PDSCH demodulation according to the fourth embodiment of the present disclosure.

FIG. 10 is a schematic diagram of an LTE downlink subframe in the prior art.

FIG. 11 is a flowchart of a method 1100 executed in a base station according to an embodiment of the present disclosure.

FIG. 12 is a flowchart of a method 1200 executed in a user equipment according to an embodiment of the present disclosure.

Description of Embodiments

The following describes the present disclosure in detail with reference to the accompanying drawings and specific embodiments. It should be noted that the present disclosure is not limited by these specific embodiments. In addition, for simplicity, a detailed description of a known art not directly related to the present disclosure is omitted to prevent confusion in understanding the present disclosure.

Multiple embodiments according to the present disclosure are specifically described below by using an LTE mobile communications system and its subsequent evolved version as an exemplary application environment. However, it is to be noted that the present disclosure is not limited to the following embodiments, but may be applied to other wireless communication systems, such as a future 5G cellular communication system.

The base stations and user equipments mentioned in the following embodiments of the present disclosure all refer to narrowband Internet of Things (NB-IoT) base stations and user equipments. As described before, these NB-IoT user equipments support uplink/downlink 180 KHz RF bandwidth.

As used herein, a narrowband Internet of Things physical downlink shared channel is called NB-PDSCH for short, and a narrowband Internet of Things physical downlink control channel is called NB-PDCCH for short. A narrowband Internet of Things physical downlink channel may be an NB-PDSCH and/or an NB-PDCCH. A reference signal for demodulating the narrowband Internet of Things physical downlink channel is called a DMRS. A resource element for transmitting the DMRS is called a DMRS RE.

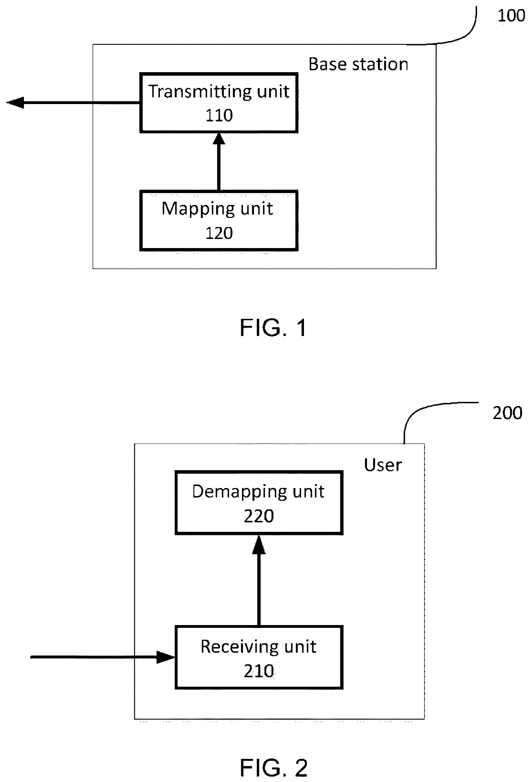

FIG. 1 is a block diagram of a base station 100 according to the present disclosure. As shown in the figure, the base station 100 includes: a transmitting unit 110 and a mapping unit 120. Those skilled in the art should understand that the base station 100 may also include other functional units needed for implementing its functions, such as various processors, memories, radio frequency receiving units, baseband signal extracting units, physical uplink channel reception processing units, and other physical downlink channel transmission processing units. However, for the sake of conciseness, detailed descriptions of these well-known elements are omitted.

The mapping unit 120 is configured to multiplex more than one narrowband Internet of Things physical downlink channel in the same subframe. Specifically, the mapping unit 120 maps the NB-PDCCH and/or NB-PDSCH to resource elements corresponding to each channel according to the result of multiplexing and resource allocation of the narrowband Internet of Things physical downlink channels. A minimum granularity for resource allocation of the narrowband Internet of Things physical downlink channels is in a unit of an enhanced resource element group (EREG), and the EREG is composed of multiple resource elements (REs) defined in two dimensions of time and frequency in the same subframe.

In some examples, both an NB-PDSCH and an NB-PDCCH are multiplexed in the same subframe. However, in some other examples, multiple NB-PDSCHs are multiplexed and no NB-PDCCH is multiplexed in the same subframe.

One NB-PDCCH is composed of one or more enhanced control channel elements (ECCEs), and each ECCE is mapped to one or more EREGs.

One NB-PDSCH is composed of one or more enhanced shared channel elements (ESCEs), and each ESCE is mapped to one or more EREGs.

The definition of the EREG may be consistent with the definition in the existing 3GPP TS 36.211 V11.3.0 (2013-06) specification. For example, in an NB-IoT downlink subframe, all resource elements except resource elements carrying 24 demodulation reference signals (namely, 24 resource elements located on the 5th, 6th, 12th, and 13th OFDM symbols in the 0th, 1st, 5th, 6th, 10th, and 11th subcarriers in the subframe) are cyclically numbered in ascending order from 0 to 15 according to a sequence of frequency domain first and then time domain; and resource elements having the same number belong to the same EREG group. For example, all resource elements having the number 0 constitute EREG #0; all resource elements having the number 1 constitute EREG #1; and so on. In this example, 12 subcarriers in the subframe are numbered 0, 1,..., 11 according to frequency, from low to high; and 14 OFDM symbols are numbered 0, 1,..., 13 in time sequence.

It should be understood that the definition of the EREG is not limited to the above definition manner; and the EREG may also be any combination of resource elements distributed in two dimensions of time domain and frequency domain in the same subframe. For example, in one NB-IoT downlink subframe, all resource elements except resource elements carrying demodulation reference signals may be cyclically numbered in ascending order from 0 to 15 according to a sequence of time domain first and then frequency domain; and then resource elements having the same number are categorized into the same EREG group. The present disclosure is not limited in this regard.

The specific configuration of the resource elements for the demodulation reference signals may be determined based on the multiplexing status of the narrowband Internet of Things physical downlink channels (for example, whether an NB-PDCCH and an NB-PDSCH are simultaneously multiplexed in the same subframe; and/or the number of the multiplexed physical downlink channels).

Optionally, a demodulation reference signal antenna port for demodulating each NB-PDCCH and/or NB-PDSCH may be indicated in an implicit manner. For example, a number of a first ECCE in all ECCEs occupied by a to-be-demodulated NB-PDCCH may be used for implicit indication, or a number of a first ESCE in all ESCEs occupied by a to-be-demodulated NB-PDSCH may be used for implicit indication. Alternatively, a C-RNTI of a user equipment corresponding to the to-be-demodulated NB-PDCCH or NB-PDSCH may be used for implicit indication.

Optionally, a demodulation reference signal antenna port for demodulating each NB-PDCCH and/or NB-PDSCH may be indicated in an explicit manner. For example, downlink control information (DCI) or radio resource control (RRC) signaling may be used for explicit indication.

The transmitting unit 110 is configured to transmit the downlink subframe. In this way, multiple narrowband Internet of Things physical downlink channels can be transmitted by multiplexing in the same subframe.

FIG. 2 is a block diagram of a user equipment (UE) 200 according to the present disclosure. As shown in the figure, the UE 200 includes: a receiving unit 210 and a demapping unit 220. Those skilled in the art should understand that the UE 200 also includes other functional units needed for implementing its functions, such as various processors, memories, radio frequency transmitting units, baseband signal extracting units, physical uplink channel transmission processing units, and other physical downlink channel reception processing units. However, for the sake of conciseness, detailed descriptions of these well-known elements are omitted.

The receiving unit 210 is configured to receive a downlink subframe transmitted from a base station. More than one narrowband Internet of Things physical downlink channel is multiplexed in the subframe. A minimum granularity for resource allocation of the narrowband Internet of Things physical downlink channels is in a unit of an EREG. The EREG is composed of multiple resource elements defined in two dimensions of time and frequency in the same subframe. The narrowband Internet of Things physical downlink channels include NB-PDCCHs and/or NB-PDSCHs.

The demapping unit 220 is configured to extract, from the received downlink subframe, a narrowband Internet of Things physical downlink channel for the user equipment. Specifically, the demapping unit 220 extracts a physical downlink channel, such as an NB-PDCCH and/or NB-PDSCH, for the user equipment according to multiplexing rules and the resource allocation result of the narrowband Internet of Things physical downlink channels.

The demapping unit 220 may acquire a demodulation reference signal antenna port for narrowband Internet of Things physical downlink channel (NB-PDCCH or NB-PDSCH) demodulation in an implicit manner. For example, the demodulation reference signal antenna port may be implicitly acquired through the number of a first ECCE in all ECCEs occupied by a to-be-demodulated NB-PDCCH, or the demodulation reference signal antenna port may be implicitly acquired through the number of a first ESCE in all ESCEs occupied by a to-be-demodulated NB-PDSCH. For another example, the demapping unit 220 may implicitly acquire the demodulation reference signal antenna port through a C-RNTI of the user equipment.

Alternatively, the demapping unit 220 is further configured to acquire a demodulation reference signal antenna port for narrowband Internet of Things physical downlink channel (NB-PDCCH or NB-PDSCH) demodulation in an explicit manner, such as acquiring the demodulation reference signal antenna port through an indication in downlink control information (DCI) or radio resource control (RRC) signaling transmitted by the base station.

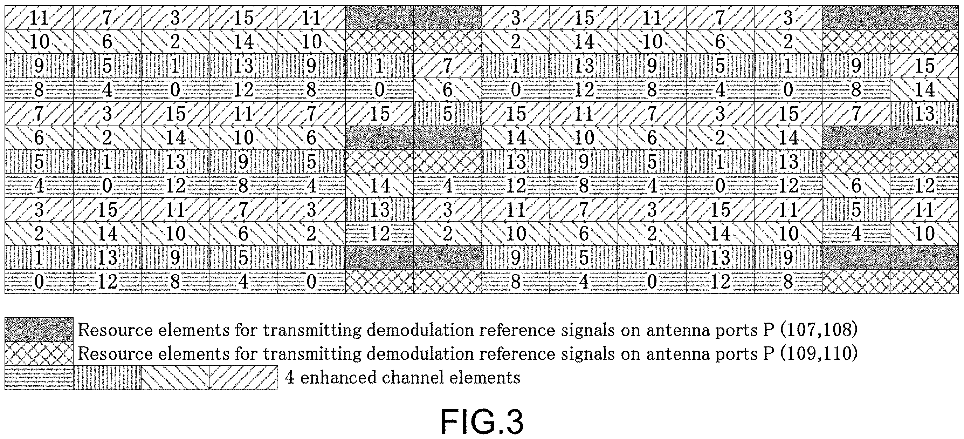

Various embodiments of the present disclosure will be specifically described below with reference to FIG. 3 to FIG. 9.

Embodiment 1

FIG. 3 is a schematic diagram illustrating multiplexing of more than one narrowband Internet of Things physical downlink channel based on an enhanced channel element (ECE) in the same subframe, where one ECE is composed of 4 enhanced resource element groups (EREGs). One narrowband Internet of Things physical downlink channel (NB-PDCCH or NB-PDSCH) is composed of one or more enhanced channel elements. Then, in this embodiment, up to 4 narrowband Internet of Things physical downlink channels can be multiplexed in the same subframe.

The EREGs are used for defining a mapping between NB-PDCCHs and/or NB-PDSCHs and resource elements. One narrowband Internet of Things downlink subframe (or one physical resource block pair) contains 16 EREGs numbered 0 to 15, and each EREG is composed of 9 resource elements. As shown in FIG. 3, in a narrowband Internet of Things downlink subframe, all resource elements except resource elements carrying demodulation reference signals of antenna ports P (107, 108, 109, and 110) (namely, 24 resource elements located on the 5th, 6th, 12th, and 13th OFDM symbols in the 0th, 1st, 5th, 6th, 10th, and 11th subcarriers in the subframe) are cyclically numbered in ascending order from 0 to 15 according to a sequence of first frequency domain and then time domain; and resource elements having the same number belong to the same EREG group. For example, all resource elements having the number 0 constitute EREG #0; all resource elements having the number 1 constitute EREG #1; and so on.

In this embodiment, one ECE is composed of 4 EREGs. One narrowband Internet of Things downlink subframe contains 4 ECEs numbered 0 to 3. ECE #0 is composed of EREGs #0, #4, #8, and #12; ECE #1 is composed of EREGs #1, #5, #9, and #13; ECE #2 is composed of EREGs #2, #6, #10, and #14; ECE #3 is composed of EREGs #3, #7, #11, and #15.

For an NB-PDCCH, the ECE may be called an enhanced control channel element (ECCE). For an NB-PDSCH, the ECE may be called an enhanced shared channel element (ESCE). The definitions of the ECCE and ESCE are similar to the above definition of the ECE.

In this embodiment, it is allowed that multiple NB-PDCCHs are multiplexed in the same subframe based on an ECE (or ECCE); or one or more NB-PDCCHs and one or more NB-PDSCHs are multiplexed in the same subframe based on an ECE (or ECCE or ESCE); or multiple NB-PDSCHs are multiplexed in the same subframe based on an ECE (or ESCE).

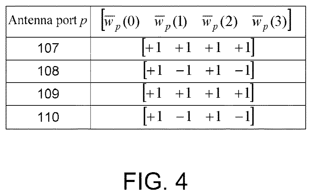

FIG. 4 illustrates orthogonal cover code (OCC) sequences $\overline{w}_p(i)$ corresponding to 4 demodulation reference signal (DMRS) antenna ports P (for example, 107, 108, 109, and 110) for demodulating narrowband downlink (NB-PDCCHs and/or NB-PDSCHs) according to the first embodiment of the present disclosure. For the antenna ports P (107, 108, 109, and 110), reference signal sequences r(m) thereof are defined as follows:

$$r(m) = \frac{1}{\sqrt{2}}\left(1 - 2 \cdot c(2m)\right) + j\frac{1}{\sqrt{2}}\left(1 - 2 \cdot c(2m+1)\right), \qquad m = \begin{cases} 0,\, 1,\, \ldots,\, 12 N_{RB}^{max,DL} - 1 & \text{Normal cyclic prefix} \\ 0,\, 1,\, \ldots,\, 16 N_{RB}^{max,DL} - 1 & \text{Extended cyclic prefix} \end{cases}$$

$N_{RB}^{max,\,DL}$ is the maximum downlink bandwidth in a unit of RB.

The sequence C(n) is a Gold sequence, a generalized chirp like (GCL) sequence, a Walsh-Hadamard sequence, or the like.

The DMRSs of the 4 antenna ports will be used for demodulating the NB-PDCCHs and/or NB-PDSCHs multiplexed in the NB-IoT subframe. The specific antenna port whose DMRS is used for demodulating the specific NB-PDCCH and/or NB-PDSCH may be indicated in an implicit manner. For example, the DMRS antenna port for demodulating the NB-PDCCH and/or NB-PDSCH is indicated by the number of a first ECE (ECCE or ESCE) in all ECEs (ECCEs or ESCEs) occupied by the NB-PDCCH and NB-PDSCH; alternatively, the DMRS antenna port for demodulating the NB-PDCCH and/or NB-PDSCH is indicated by a remainder obtained by a C-RNTI of an NB-IoT UE modulo 4.

Alternatively, the DMRS antenna port for demodulating the NB-PDCCH and/or NB-PDSCH may be explicitly indicated with downlink control information (DCI) or radio resource control (RRC) signaling.

Embodiment 2

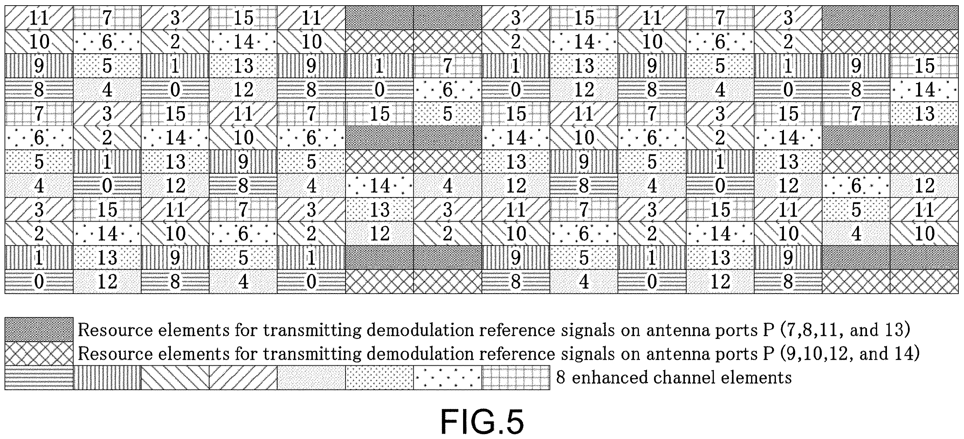

FIG. 5 is a schematic diagram illustrating multiplexing of more than one narrowband Internet of Things physical downlink channel based on an ECE in the same subframe, where one ECE is composed of 2 EREGs. One narrowband Internet of Things physical downlink channel (NB-PDCCH or NB-PDSCH) is composed of one or more enhanced channel elements. Then, in this embodiment, up to 8 narrowband Internet of Things physical downlink channels can be multiplexed in the same subframe.

The EREGs are used for defining a mapping between NB-PDCCHs and/or NB-PDSCHs and resource elements. One narrowband Internet of Things downlink subframe (or one physical resource block pair) contains 16 EREGs numbered 0 to 15, and each EREG is composed of 9 resource elements. As shown in FIG. 5, in a narrowband Internet of Things downlink subframe, all resource elements except resource elements carrying demodulation reference signals of antenna ports P (7, 8, 9, 10, 11, 12, 13, and 14) (namely, 24 resource elements located on the 5th, 6th, 12th, and 13th OFDM symbols in the 0th, 1st, 5th, 6th, 10th, and 11th subcarriers in the subframe) are cyclically numbered in ascending order from 0 to 15 according to a sequence of first frequency domain and then time domain; and resource elements having the same number belong to the same EREG group. For example, all resource elements having the number 0 constitute EREG #0; all resource elements having the number 1 constitute EREG #1; and so on.

In this embodiment, one ECE is composed of 2 EREGs. One narrowband Internet of Things downlink subframe contains 8 ECEs numbered 0 to 7. ECE #0 is composed of EREGs #0 and #8; ECE #1 is composed of EREGs #1 and #9; ECE #2 is composed of EREGs #2 and #10; ECE #3 is composed of EREGs #3 and #11; ECE #4 is composed of EREGs #4 and #12; ECE #5 is composed of EREGs #5 and #13; ECE #6 is composed of EREGs #6 and #14; ECE #7 is composed of EREGs #7 and #15.

For an NB-PDCCH, the ECE may be called an enhanced control channel element (ECCE). For an NB-PDSCH, the ECE may be called an enhanced shared channel element (ESCE). The definitions of the ECCE and ESCE are similar to the above definition of the ECE.

In this embodiment, multiple NB-PDCCHs are allowed to be multiplexed in the same subframe based on an ECE (or ECCE); or one or more NB-PDCCHs and one or more NB-PDSCHs are multiplexed in the same subframe based on an ECE (or ECCE or ESCE); or multiple NB-PDSCHs are multiplexed in the same subframe based on an ECE (or ESCE).

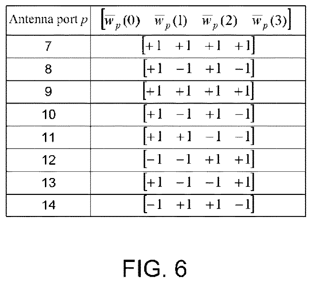

FIG. 6 illustrates $\overline{w}_p(i)$ sequences corresponding to 8 DMRS antenna ports (for example, 7, 8, 9, 10, 11, 12, 13, and 14) for demodulating narrowband downlink (NB-PDCCHs and/or NB-PDSCHs) according to the second embodiment of the present disclosure. For the antenna ports P (7, 8, 9, 10, 11, 12, 13, and 14), reference signal sequences r(m) thereof are generated using a generation method for reference signal sequences of UE-specific reference signal antenna ports P (7, 8, 9, 10, 11, 12, 13, and 14) for demodulating PDSCHs in the 3GPP TS 36.211 V11.3.0 (2013-06) specification.

The DMRSs of the 8 antenna ports will be used for demodulating the NB-PDCCHs and/or NB-PDSCHs multiplexed in the NB-IoT subframe. The specific antenna port whose DMRS is used for demodulating the specific NB-PDCCH and/or NB-PDSCH may be indicated in an implicit manner. For example, the DMRS antenna port for demodulating the NB-PDCCH and/or NB-PDSCH is indicated by the number of a first CEC (ECCE or ESCE) in ECEs (ECCEs or ESCEs) occupied by the NB-PDCCH and NB-PDSCH; alternatively, the DMRS antenna port for demodulating the NB-PDCCH and/or NB-PDSCH is indicated by a remainder obtained by a C-RNTI of an NB-IoT UE modulo 8.

Alternatively, the DMRS antenna port for demodulating the NB-PDCCH and/or NB-PDSCH may be explicitly indicated with downlink control information (DCI) or radio resource control (RRC) signaling.

Embodiment 3

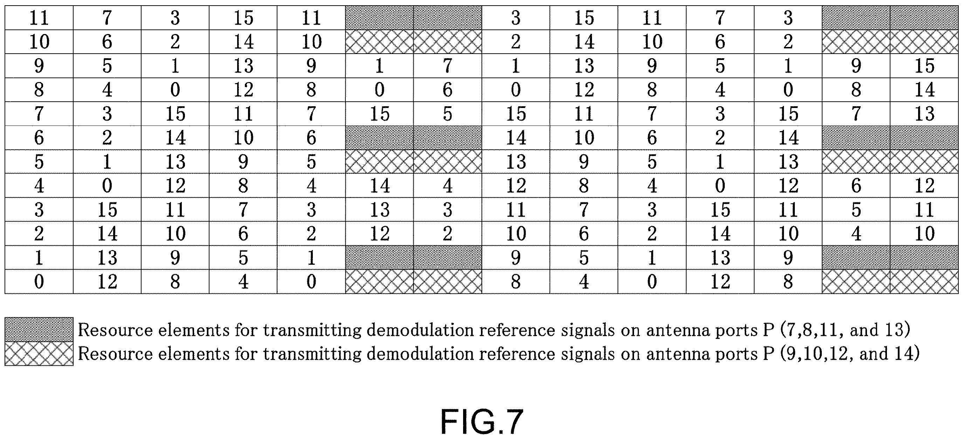

FIG. 7 is a schematic diagram illustrating multiplexing of multiple NB-PDSCHs (or NB-PDCCHs) based on an enhanced channel element (ECE) in the same subframe. In this embodiment, multiple NB-PDCCHs are allowed to be multiplexed in the same subframe based on an ECE (or ECCE); or multiple NB-PDSCHs are multiplexed in the same subframe based on an ECE (or ESCE), but it is not allowed that NB-PDCCHs and NB-PDSCHs are multiplexed in the same subframe. Moreover, in one NB-IoT downlink subframe, the number of the multiplexed NB-PDSCHs (or NB-PDCCHs) is an integer greater than 4 and less than or equal to 8. In other words, in one NB-IoT downlink subframe, the number of the multiplexed NB-IoT UEs is an integer greater than 4 and less than or equal to 8. Multiple NB-PDSCHs being multiplexed in the same subframe is used an example for description below.

EREGs are used for defining a mapping between NB-PDSCHs and resource elements. One narrowband Internet of Things downlink subframe (or one physical resource block pair) contains 16 EREGs numbered 0 to 15, and each EREG is composed of 9 resource elements. As shown in FIG. 7, in a narrowband Internet of Things downlink subframe, all resource elements except resource elements carrying demodulation reference signals of antenna ports P (7, 8, 9, 10, 11, 12, 13, and 14) (namely, 24 resource elements located on the 5th, 6th, 12th, and 13th OFDM symbols in the 0th, 1st, 5th, 6th, 10th, and 11th subcarriers in the subframe) are cyclically numbered in ascending order from 0 to 15 according to a sequence of first frequency domain and then time domain, and resource elements having the same number belong to the same EREG group. For example, all resource elements having the number 0 constitute EREG #0; all resource elements having the number 1 constitute EREG #1; and so on.

A minimum granularity for resource allocation of the NB-PDSCHs may be 1 EREG or 2 EREGs.

If the minimum granularity for resource allocation of the NB-PDSCHs is 1 EREG, at this time, 1 ECE is 1 EREG.

For the NB-PDSCHs, the ECE may be called an enhanced shared channel element (ESCE). The definition of the ECE is similar to the above definition of the ECE.

$\overline{w}_p(i)$ sequences corresponding to 8 DMRS antenna ports P (for example, 7, 8, 9, 10, 11, 12, 13, and 14) for demodulating the NB-PDSCHs may be shown in FIG. 6. For the antenna ports P (7, 8, 9, 10, 11, 12, 13, and 14), reference signal sequences r(m) thereof are generated using a generation method for reference signal sequences of UE-specific reference signal antenna ports P (7, 8, 9, 10, 11, 12, 13, and 14) for demodulating PDSCHs in the 3GPP TS 36.211 V11.3.0 (2013-06) specification.

DMRSs of the 8 antenna ports will be used for demodulating the multiple NB-PDSCHs multiplexed in the NB-IoT subframe. The specific antenna port whose DMRS is used for demodulating the specific NB-PDSCH may be indicated in an implicit manner. For example, a remainder obtained by a C-RNTI of an NB-IoT UE modulo 8 is used for indicating a reference signal antenna port for demodulating an NB-PDSCH of the NB-IoT UE.

Alternatively, the demodulation of the NB-PDSCH may be explicitly indicated with downlink control information (DCI) or radio resource control (RRC) signaling.

If the minimum granularity for resource allocation of the NB-PDSCHs is 2 EREGs, at this time, 1 ECE is composed of 2 EREGs. One NB-IoT downlink subframe contains 8 ECEs numbered 0 to 7. ECE #0 is composed of EREGs #0 and #8; ECE #1 is composed of EREGs #1 and #9; ECE #2 is composed of EREGs #2 and #10; ECE #3 is composed of EREGs #3 and #11; ECE #4 is composed of EREGs #4 and #12; ECE #5 is composed of EREGs #5 and #13; ECE #6 is composed of EREGs #6 and #14; ECE #7 is composed of EREGs #7 and #15.

For the NB-PDSCHs, the ECE may be called an enhanced shared channel element (ESCE). The definition of the ECE is similar to the above definition of the ECE.

$\overline{w}_p(i)$ sequences corresponding to 8 DMRS antenna ports P (7, 8, 9, 10, 11, 12, 13, and 14) for demodulating the NB-PDSCHs may be shown in FIG. 6. For the antenna ports P (7, 8, 9, 10, 11, 12, 13, and 14), reference signal sequences r(m) thereof are generated using a generation method for reference signal sequences of UE-specific reference signal antenna ports P (7, 8, 9, 10, 11, 12, 13, and 14) for demodulating PDSCHs in the 3GPP TS36.211 V11.3.0 (2013-06) specification.

DMRSs of the 8 antenna ports will be used for demodulating the multiple NB-PDSCHs multiplexed in the NB-IoT subframe. The specific antenna port whose DMRS is used for demodulating the specific NB-PDSCH may be indicated in an implicit manner. For example, the DMRS antenna port for demodulating the NB-PDSCH is indicated by the number of a first CEC (or ESCE) in ECEs (or ESCEs) occupied by the NB-PDSCH; alternatively, the DMRS antenna port for demodulating the NB-PDSCH is indicated by a remainder obtained by a C-RNTI of an NB-IoT UE modulo 8 to indicate a reference signal antenna port for demodulating an NB-PDSCH of the NB-IoT UE.

Alternatively, the demodulation of the NB-PDSCH may be explicitly indicated with downlink control information (DCI) or radio resource control (RRC) signaling.

Embodiment 4

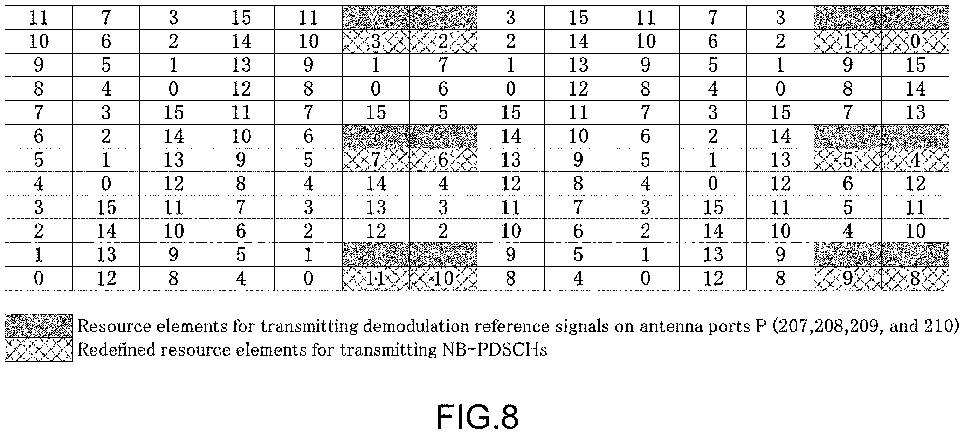

FIG. 8 is a schematic diagram illustrating multiplexing of multiple NB-PDSCHs (or NB-PDCCHs) based on an enhanced channel element (ECE) in the same subframe. Like Embodiment 3, in Embodiment 4, multiple NB-PDCCHs are allowed to be multiplexed in the same subframe based on an ECE (or ECCE): or multiple NB-PDSCHs are multiplexed in the same subframe based on an ECE (or ESCE), but it is not allowed that NB-PDCCHs and NB-PDSCHs are multiplexed in the same subframe. Moreover, in one NB-IoT downlink subframe, the number of the multiplexed NB-PDSCHs (or NB-PDCCHs) is less than or equal to 4. In other words, in one NB-IoT downlink subframe, the number of the multiplexed NB-IoT UEs is less than or equal to 4. At this time, DMRSs of only 4 antenna ports are needed for demodulating the NB-PDSCH (or NB-PDCCH). Then, 12 resource elements are needed for transmitting demodulation reference signals on the 4 antenna ports P (207, 208, 209, and 210), as shown in FIG. 8. As compared with the above embodiments, the additional 12 resource elements may be used for transmitting NB-PDSCH (or NB-PDCCH) data. Multiple NB-PDSCHs being multiplexed in the same subframe is used an example for description below.

EREGs are used for defining a mapping between NB-PDSCHs and resource elements. One narrowband Internet of Things downlink subframe (or one physical resource block pair) contains 16 EREGs numbered 0 to 15. The EREGs are generated in the following two manners.

Manner 1: as shown in FIG. 8, in one NB-IoT downlink subframe, all resource elements except resource elements carrying demodulation reference signals of antenna ports P (7, 8, 9, 10, 11, 12, 13, and 14) and redefined resource elements for transmitting NB-PDSCHs (namely, 24 resource elements located on the 5th, 6th, 12th, and 13th OFDM symbols in the 0th, 1st, 5th, 6th, 10th, and 11th subcarriers in the subframe) are cyclically numbered in ascending order from 0 to 15 according to a sequence of first frequency domain and then time domain, and resource elements having the same number belong to the same EREG group. For example, all resource elements having the number 0 constitute EREG #0; all resource elements having the number 1 constitute EREG #1; and so on. Moreover, the additional 12 resource elements may be rearranged into 12 EREGs of the 16 EREGs. There are multiple arrangement manners. One arrangement manner is shown in FIG. 8; and the 12 resource elements are arranged into EREGs #0 to #12 as shown in FIG. 8.

Manner 2: in one NB-IoT downlink subframe, all resource elements except resource elements carrying demodulation reference signals of antenna ports P (207, 208, 209, and 210) (namely, 12 resource elements located on the 5th, 6th, 12th, and 13th OFDM symbols in the 1st, 6th, and 11th subcarriers in the subframe) are cyclically numbered in ascending order from 0 to 15 according to a sequence of first frequency domain and then time domain; and resource elements having the same number belong to the same EREG group. For example, all resource elements having the number 0 constitute EREG #0; all resource elements having the number 1 constitute EREG #1; and so on.

A minimum granularity for resource allocation of the NB-PDSCHs may be 1 EREG or 2 EREGs or 4 EREGs.

If the minimum granularity for resource allocation of the NB-PDSCHs is 1 EREG, at this time, 1 ECE is 1 EREG.

If the minimum granularity for resource allocation of the NB-PDSCHs is 2 EREGs, at this time, 1 ECE is composed of 2 EREGs. One NB-IoT downlink subframe contains 8 ECEs numbered 0 to 7. ECE #0 is composed of EREGs #0 and #8; ECE #1 is composed of EREGs #1 and #9; ECE #2 is composed of EREGs #2 and #10; ECE #3 is composed of EREGs #3 and #11; ECE #4 is composed of EREGs #4 and #12; ECE #5 is composed of EREGs #5 and #13; ECE #6 is composed of EREGs #6 and #14; ECE #7 is composed of EREGs #7 and #15.

If the minimum granularity for resource allocation of the NB-PDSCHs is 4 EREGs, at this time, one ECE is composed of 4 EREGs. One NB-IoT downlink subframe contains 4 ECEs numbered 0 to 3. ECE #0 is composed of EREGs #0, #4, #8, and #12; ECE #1 is composed of EREGs #1, #5, #9, and #13; ECE #2 is composed of EREGs #2, #6, #10, and #14; ECE #3 is composed of EREGs #3, #7, #11, and #15.

For the NB-PDSCHs, the ECE may be called an enhanced shared channel element (ESCE). The definition of the ECE is similar to the above definition of the ECE.

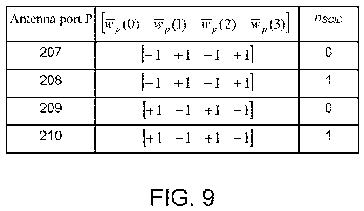

$\overline{w}_p(i)$ sequences and $n_{SCID}$ corresponding to 4 DMRS antenna ports P (for example, 207, 208, 209, and 210) for demodulating the NB-PDSCHs may be shown in FIG. 9. For the antenna ports P (207, 208, 209, and 210), reference signal sequences r(m) thereof are generated using a generation method for reference signal sequences of UE-specific reference signal antenna ports P (7, 8, 9, 10, 11, 12, 13, and 14) for demodulating PDSCHs in the 3GPP TS 36.211 V11.3.0 (2013-06) specification.

DMRSs of the 4 antenna ports will be used for demodulating the multiple NB-PDSCHs multiplexed in the NB-IoT subframe. The specific antenna port whose DMRS is used for demodulating the specific NB-PDSCH may be indicated in an implicit manner. For example, the DMRS antenna port for demodulating the NB-PDSCH is indicated by the number of a first CEC (or ESCE) in all ECEs (or ESCEs) occupied by the NB-PDSCH; alternatively, the DMRS antenna port for demodulating the NB-PDSCH is indicated by a remainder obtained by a C-RNTI of an NB-IoT UE modulo 4 to indicate a reference signal antenna port for demodulating an NB-PDSCH of the NB-IoT UE.

Alternatively, the demodulation of the NB-PDSCH may be explicitly indicated with downlink control information (DCI) or radio resource control (RRC) signaling.

The EREG in Embodiments 1, 2, 3, and 4 is not limited to the above definition manner, and may also be any combination of resource elements distributed in two dimensions of time domain and frequency domain. Alternatively, the EREG may also be any combination of resource elements distributed in two dimensions of time domain and frequency domain in multiple subframes.

Embodiment 5

NB-PDCCHs and/or NB-PDSCHs are multiplexed by frequency division multiplexing or time division multiplexing in the same subframe. That is, the NB-PDCCHs and/or NB-PDSCHs are multiplexed in a unit of one or more subcarriers; or the NB-PDCCHs and NB-PDSCHs are multiplexed in a unit of one or more orthogonal frequency division multiplexing (OFDM) symbols.

DMRSs of 4 or 8 antenna ports may be used for demodulating the NB-PDCCHs and/or NB-PDSCHs multiplexed in the NB-IoT subframe. The specific antenna port whose DMRS is used for demodulation may be indicated in an implicit manner. For example, the DMRS antenna port for demodulating the NB-PDCCH (or NB-PDSCH) is indicated by the number of a first subcarrier (or OFDM symbol) in subcarriers (or OFDM symbols) occupied by the NB-PDCCH (or NB-PDSCH); alternatively, the DMRS antenna port for demodulating the NB-PDCCH (or NB-PDSCH) is indicated by a remainder obtained by a C-RNTI of an NB-IoT UE modulo 8.

Alternatively, the DMRS antenna port for demodulating the NB-PDCCH and/or NB-PDSCH may be explicitly indicated with downlink control information (DCI) or radio resource control (RRC) signaling.

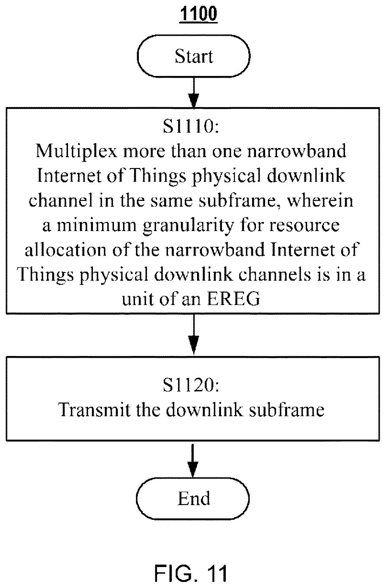

FIG. 11 is a flowchart of a method 1100 executed in a base station according to an embodiment of the present disclosure.

In step S1110, more than one narrowband Internet of Things physical downlink channel is multiplexed in the same subframe. The narrowband Internet of Things physical downlink channels include NB-PDCCHs and/or NB-PDSCHs. A minimum granularity for resource allocation of the narrowband Internet of Things physical downlink channels is in a unit of an EREG. The EREG is composed of multiple resource elements defined in two dimensions of time and frequency in the same subframe.

In step S1120, the downlink subframe is transmitted.

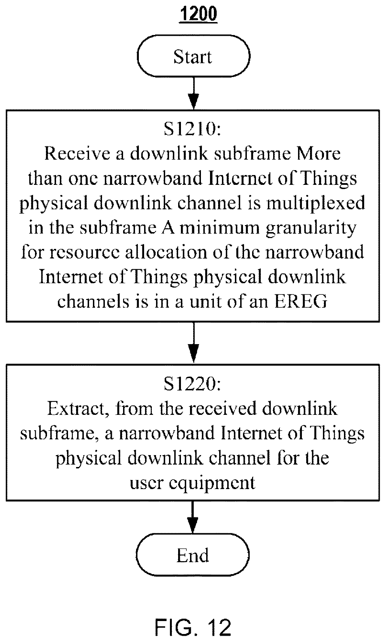

FIG. 12 is a flowchart of a method 1200 executed in a user equipment according to an embodiment of the present disclosure.

In step S1210, a downlink subframe is received. More than one narrowband Internet of Things physical downlink channel is multiplexed in the subframe. The narrowband Internet of Things physical downlink channels include NB-PDCCHs and/or NB-PDSCHs. A minimum granularity for resource allocation of the narrowband Internet of Things physical downlink channels is in a unit of an EREG. The EREG is composed of multiple resource elements defined in two dimensions of time and frequency in the same subframe.

In step S1220, a narrowband Internet of Things physical downlink channel, for example, an NB-PDCCH or NB-PDSCH, for the user equipment is extracted from the received downlink subframe.

The methods 1100 and 1200 according to the present disclosure may be respectively executed by the base station and the user equipment according to the embodiments of the present disclosure. The operations of the base station and the user equipment according to the embodiments of the present disclosure have been described in detail above, and the details of the methods according to the embodiments of the present disclosure will not be described herein again.

The methods and related devices according to the present disclosure have been described above in conjunction with preferred embodiments. It should be understood by those skilled in the art that the methods shown above are only exemplary. The method according to the present disclosure is not limited to steps or sequences shown above. The network node and the user equipment illustrated above may comprise more modules; for example, they may further comprise modules which can be developed or developed in the future to be applied to modules of a base station, an MME, or a UE. Various identifiers shown above are only exemplary, but not for limiting the present disclosure; and the present disclosure is not limited to specific cells described as examples of these identifiers. A person skilled in the art can make various alterations and modifications according to the teachings of the illustrated embodiments.

It should be understood that the above embodiments of the present disclosure may be implemented through software, hardware, or a combination of software and hardware. For example, various components of the base station and user equipment in the above embodiments can be realized through multiple devices, and these devices include, but are not limited to: an analog circuit device, a digital circuit device, a digital signal processing (DSP) circuit, a programmable processor, an application specific integrated circuit (ASIC), a field programmable gate array (FPGA), and a complex programmable logic device (CPLD), and the like.

In this application, the "base station" refers to a mobile communication data and control switching center with large transmission power and wide coverage area, including resource allocation scheduling, data receiving, and transmitting functions. The term "user equipment" refers to a user mobile terminal, such as a terminal device that can perform wireless communication with a base station or a micro base station, including a mobile phone, a notebook, or the like.

In addition, the embodiments disclosed herein may be implemented on a computer program product. More specifically, the computer program product is a product provided with a computer-readable medium having computer program logic encoded thereon. When executed on a computing device, the computer program logic provides related operations to implement the above-described technical solutions of the present disclosure. When being executed on at least one processor of a computing system, the computer program logic enables the processor to perform the operations (methods) described in the embodiments of the present disclosure. Such an arrangement of the present disclosure is typically provided as software, code, and/or other data structures that are configured or encoded on a computer-readable medium, such as an optical medium (for example, a CD-ROM), a floppy disk, or a hard disk, or other media such as firmware or microcode on one or more ROM or RAM or PROM chips, or downloadable software images, shared database and so on in one or more modules. Software or firmware or such configuration may be installed on a computing equipment such that one or more processors in the computing equipment perform the technical solutions described in the embodiments of the present disclosure.

In addition, each functional module or each feature of the base station equipment and the terminal equipment used in each of the above embodiments may be implemented or executed by a circuit, which is usually one or more integrated circuits. Circuits designed to perform various functions described in this description may include general purpose processors, digital signal processors (DSPs), application specific integrated circuits (ASICs) or general purpose integrated circuits, field programmable gate arrays (FPGAs) or other programmable logic devices, discrete gates or transistor logic, or discrete hardware components, or any combination of the above. The general purpose processor may be a microprocessor; or the processor may be an existing processor, a controller, a microcontroller, or a state machine. The above-mentioned general purpose processor or each circuit may be configured with a digital circuit or may be configured with a logic circuit. In addition, when an advanced technology that can replace current integrated circuits emerges because of advances in semiconductor technology, the present disclosure may also use integrated circuits obtained using this advanced technology.

Although the present disclosure has been shown in connection with the preferred embodiments disclosed herein, it will be understood by those skilled in the art that various modifications, substitutions, and alterations may be made therein without departing from the spirit and scope of the present disclosure. Accordingly, the present disclosure should not be defined by the above-described embodiments, but should be defined by the appended claims and their equivalents.

**Claims**

1. A base station, comprising: a mapping unit, configured to multiplex more than one narrowband Internet of Things physical downlink channel in the same subframe, wherein the narrowband Internet of Things physical downlink channels comprise narrowband Internet of Things physical downlink control channels "NB-PDCCHs" and/or narrowband Internet of Things physical downlink shared channels "NB-PDSCHs", a minimum granularity for resource allocation of the narrowband Internet of Things physical downlink channels is in a unit of an enhanced resource element group "EREG", and the EREG is composed of multiple resource elements defined in two dimensions of time and frequency in the same subframe; and a transmitting unit, configured to transmit a downlink subframe.

2. The base station according to claim 1, wherein one NB-PDCCH is composed of one or more enhanced control channel elements "ECCEs", and each ECCE is mapped to one or more EREGs; and/or one NB-PDSCH is composed of one or more enhanced shared channel elements "ESCEs", and each ESCE is mapped to one or more EREGs.

3. The base station according to claim 1, wherein the enhanced resource element group is an enhanced resource element group in 16 enhanced resource element groups in one physical resource block pair defined in the 3GPP TS 36.211 V11.3.0 specification.

4. The base station according to claim 1, wherein both an NB-PDSCH and an NB-PDCCH are multiplexed in the same subframe.

5. The base station according to claim 1, wherein more than one NB-PDSCH is multiplexed and no NB-PDCCH is multiplexed in the same subframe.

6. The base station according to claim 1, wherein a demodulation reference signal antenna port for demodulating narrowband Internet of Things physical downlink channel is indicated in an implicit manner.

7. The base station according to claim 6, wherein the implicit manner comprises: using a number of a first ECCE in all ECCEs occupied by a to-be-demodulated NB-PDCCH for implicit indication, or using a number of a first ESCE in all ESCEs occupied by a to-be-demodulated NB-PDSCH for implicit indication; or using a C-RNTI of a user equipment corresponding to the to-be-demodulated NB-PDCCH or NB-PDSCH for implicit indication.

8. The base station according to claim 1, wherein a demodulation reference signal antenna port for narrowband Internet of Things physical downlink channel demodulation is indicated in an explicit manner.

9. A method executed in a base station, the method comprising: multiplexing more than one narrowband Internet of Things physical downlink channel in the same subframe, wherein the narrowband Internet of Things physical downlink channels comprise narrowband Internet of Things physical downlink control channels "NB-PDCCHs" and/or narrowband Internet of Things physical downlink shared channels "NB-PDSCHs", a minimum granularity for resource allocation of the narrowband Internet of Things physical downlink channels is in a unit of an enhanced resource element group "EREG", and the EREG is composed of multiple resource elements defined in two dimensions of time and frequency in the same subframe; and transmitting a downlink subframe.

10. The method according to claim 9, wherein one NB-PDCCH is composed of one or more enhanced control channel elements "ECCEs", and each ECCE is mapped to one or more EREGs; and/or one NB-PDSCH is composed of one or more enhanced shared channel elements "ESCEs", and each ESCE is mapped to one or more EREGs.

11. The method according to claim 9, wherein the enhanced resource element group is an enhanced resource element group in 16 enhanced resource element groups in one physical resource block pair defined in the 3GPP TS 36.211 V11.3.0 specification.

12. The method according to claim 9, wherein both an NB-PDSCH and an NB-PDCCH are multiplexed in the same subframe.

13. The method according to claim 9, wherein more than one NB-PDSCH is multiplexed and no NB-PDCCH is multiplexed in the same subframe.

14. The method according to claim 9, wherein a demodulation reference signal antenna port for demodulating narrowband Internet of Things physical downlink channel is indicated in an implicit manner.

15. The method according to claim 14, wherein the implicit manner comprises: using a number of a first ECCE in all ECCEs occupied by a to-be-demodulated NB-PDCCH for implicit indication, or using a number of a first ESCE in all ESCEs occupied by a to-be-demodulated NB-PDSCH for implicit indication; or using a C-RNTI of a user equipment corresponding to the to-be-demodulated NB-PDCCH or NB-PDSCH for implicit indication.

16. The method according to claim 9, wherein a demodulation reference signal antenna port for demodulating narrowband Internet of Things physical downlink channel is indicated in an explicit manner.

17. A user equipment, comprising: a receiving unit, configured to receive a downlink subframe, wherein more than one narrowband Internet of Things physical downlink channel is multiplexed in the subframe, the narrowband Internet of Things physical downlink channels comprise narrowband Internet of Things physical downlink control channels "NB-PDCCHs" and/or narrowband Internet of Things physical downlink shared channels "NB-PDSCHs", a minimum granularity for resource allocation of the narrowband Internet of Things physical downlink channels is in a unit of an enhanced resource element group "EREG", and the EREG is composed of multiple resource elements defined in two dimensions of time and frequency in the same subframe; and a demapping unit, configured to extract, from the received downlink subframe, a narrowband Internet of Things physical downlink channel for the user equipment.

18. The user equipment according to claim 17, wherein one NB-PDCCH is composed of one or more enhanced control channel elements "ECCEs", and each ECCE is mapped to one or more EREGs; and/or one NB-PDSCH is composed of one or more enhanced shared channel elements "ESCEs", and each ESCE is mapped to one or more EREGs.

19. The user equipment according to claim 17, wherein the enhanced resource element group is an enhanced resource element group in 16 enhanced resource element groups in one physical resource block pair defined in the 3GPP TS 36.211 V11.3.0 specification.

20. The user equipment according to claim 17, wherein both an NB-PDSCH and an NB-PDCCH are multiplexed in the subframe.

21. The user equipment according to claim 17, wherein more than one NB-PDSCH is multiplexed and no NB-PDCCH is multiplexed in the subframe.

22. The user equipment according to claim 17, wherein the demapping unit is further configured to acquire a demodulation reference signal antenna port for narrowband Internet of Things physical downlink channel demodulation in an implicit manner.

23. The user equipment according to claim 22, wherein the implicit manner comprises: implicitly acquiring the demodulation reference signal antenna port through a number of a first ECCE in all ECCEs occupied by a to-be-demodulated NB-PDCCH or through a number of a first ESCE in all ESCEs occupied by a to-be-demodulated NB-PDSCH; or implicitly acquiring a demodulation reference signal antenna port through a C-RNTI of a user equipment corresponding to the to-be-demodulated NB-PDCCH or NB-PDSCH.

24. The user equipment according to claim 17, wherein the demapping unit is further configured to acquire a demodulation reference signal antenna port for narrowband Internet of Things physical downlink channel demodulation in an explicit manner.

25. A method executed in a user equipment, the method comprising: receiving a downlink subframe, wherein more than one narrowband Internet of Things physical downlink channel is multiplexed in the subframe, the narrowband Internet of Things physical downlink channels comprise narrowband Internet of Things physical downlink control channels "NB-PDCCHs" and/or narrowband Internet of Things physical downlink shared channels "NB-PDSCHs", a minimum granularity for resource allocation of the narrowband Internet of Things physical downlink channels is in a unit of an enhanced resource element group "EREG", and the EREG is composed of multiple resource elements defined in two dimensions of time and frequency in the same subframe; and extracting, from the received downlink subframe, a narrowband Internet of Things physical downlink channel for the user equipment.

26. The method according to claim 25, wherein one NB-PDCCH is composed of one or more enhanced control channel elements "ECCEs", and each ECCE is mapped to one or more EREGs; and/or one NB-PDSCH is composed of one or more enhanced shared channel elements "ESCEs", and each ESCE is mapped to one or more EREGs.

27. he method according to claim 25, wherein the enhanced resource element group is an enhanced resource element group in 16 enhanced resource element groups in one physical resource block pair defined in the 3GPP TS 36.211 V11.3.0 specification.

28. The method according to claim 25, wherein both an NB-PDSCH and an NB-PDCCH are multiplexed in the subframe.

29. The method according to claim 25, wherein more than one NB-PDSCH is multiplexed and no NB-PDCCH is multiplexed in the subframe.

30. The method according to claim 25, wherein a demodulation reference signal antenna port for narrowband Internet of Things physical downlink channel demodulation is acquired in an implicit manner.

31. The user equipment according to claim 30, wherein the implicit manner comprises: implicitly acquiring the demodulation reference signal antenna port through a number of a first ECCE in all ECCEs occupied by a to-be-demodulated NB-PDCCH or through a number of a first ESCE in all ESCEs occupied by a to-be-demodulated NB-PDSCH; or implicitly acquiring a demodulation reference signal antenna port through a C-RNTI of a user equipment corresponding to the to-be-demodulated NB-PDCCH or NB-PDSCH.

32. The method according to claim 25, wherein a demodulation reference signal antenna port for narrowband Internet of Things physical downlink channel demodulation is acquired in explicit manner.

100

Base station

Transmitting unit
110

Mapping unit
120

FIG. 1

200

User

Demapping unit
220

Receiving unit
210

FIG. 2

Resource elements for transmitting demodulation reference signals on antenna ports P (107,108)

Resource elements for transmitting demodulation reference signals on antenna ports P (109,110)

4 enhanced channel elements

FIG.3

| Antenna port $p$ | $\left[\overline{w}_p(0) \quad \overline{w}_p(1) \quad \overline{w}_p(2) \quad \overline{w}_p(3)\right]$ |
|---|---|
| 107 | $\left[+1 \quad +1 \quad +1 \quad +1\right]$ |
| 108 | $\left[+1 \quad -1 \quad +1 \quad -1\right]$ |
| 109 | $\left[+1 \quad +1 \quad +1 \quad +1\right]$ |
| 110 | $\left[+1 \quad -1 \quad +1 \quad -1\right]$ |

# FIG. 4

Resource elements for transmitting demodulation reference signals on antenna ports P (7,8,11, and 13)

Resource elements for transmitting demodulation reference signals on antenna ports P (9,10,12, and 14)

8 enhanced channel elements

FIG.5

EP 3 402 265 A1

| Antenna port $p$ | $\left[\overline{w}_p(0) \quad \overline{w}_p(1) \quad \overline{w}_p(2) \quad \overline{w}_p(3)\right]$ |
|---|---|
| 7 | $\left[+1 \quad +1 \quad +1 \quad +1\right]$ |
| 8 | $\left[+1 \quad -1 \quad +1 \quad -1\right]$ |
| 9 | $\left[+1 \quad +1 \quad +1 \quad +1\right]$ |
| 10 | $\left[+1 \quad -1 \quad +1 \quad -1\right]$ |
| 11 | $\left[+1 \quad +1 \quad -1 \quad -1\right]$ |
| 12 | $\left[-1 \quad -1 \quad +1 \quad +1\right]$ |
| 13 | $\left[+1 \quad -1 \quad -1 \quad +1\right]$ |
| 14 | $\left[-1 \quad +1 \quad +1 \quad -1\right]$ |

## FIG. 6

| | | | | | | | | | | | | | |
|---|---|---|---|---|---|---|---|---|---|---|---|---|---|
| 11 | 7 | 3 | 15 | 11 | | | 3 | 15 | 11 | 7 | 3 | | |
| 10 | 6 | 2 | 14 | 10 | | | 2 | 14 | 10 | 6 | 2 | | |
| 9 | 5 | 1 | 13 | 9 | 1 | 7 | 1 | 13 | 9 | 5 | 1 | 9 | 15 |
| 8 | 4 | 0 | 12 | 8 | 0 | 6 | 0 | 12 | 8 | 4 | 0 | 8 | 14 |
| 7 | 3 | 15 | 11 | 7 | 15 | 5 | 15 | 11 | 7 | 3 | 15 | 7 | 13 |
| 6 | 2 | 14 | 10 | 6 | | | 14 | 10 | 6 | 2 | 14 | | |
| 5 | 1 | 13 | 9 | 5 | | | 13 | 9 | 5 | 1 | 13 | | |
| 4 | 0 | 12 | 8 | 4 | 14 | 4 | 12 | 8 | 4 | 0 | 12 | 6 | 12 |
| 3 | 15 | 11 | 7 | 3 | 13 | 3 | 11 | 7 | 3 | 15 | 11 | 5 | 11 |
| 2 | 14 | 10 | 6 | 2 | 12 | 2 | 10 | 6 | 2 | 14 | 10 | 4 | 10 |
| 1 | 13 | 9 | 5 | 1 | | | 9 | 5 | 1 | 13 | 9 | | |
| 0 | 12 | 8 | 4 | 0 | | | 8 | 4 | 0 | 12 | 8 | | |

▨ Resource elements for transmitting demodulation reference signals on antenna ports P (7,8,11, and 13)

▧ Resource elements for transmitting demodulation reference signals on antenna ports P (9,10,12, and 14)

FIG.7

EP 3 402 265 A1

| Antenna port P | $\begin{bmatrix} \overline{w}_p(0) & \overline{w}_p(1) & \overline{w}_p(2) & \overline{w}_p(3) \end{bmatrix}$ | $n_{SCID}$ |
|---|---|---|
| 207 | $\begin{bmatrix} +1 & +1 & +1 & +1 \end{bmatrix}$ | 0 |
| 208 | $\begin{bmatrix} +1 & +1 & +1 & +1 \end{bmatrix}$ | 1 |
| 209 | $\begin{bmatrix} +1 & -1 & +1 & -1 \end{bmatrix}$ | 0 |
| 210 | $\begin{bmatrix} +1 & -1 & +1 & -1 \end{bmatrix}$ | 1 |

# FIG. 9

| | | | | | | | | | | | | | |
|---|---|---|---|---|---|---|---|---|---|---|---|---|---|
| 11 | 7 | 3 | 15 | 11 | | | 3 | 15 | 11 | 7 | 3 | | |
| 10 | 6 | 2 | 14 | 10 | 3 | 2 | 2 | 14 | 10 | 6 | 2 | 1 | 0 |
| 9 | 5 | 1 | 13 | 9 | 1 | 7 | 1 | 13 | 9 | 5 | 1 | 9 | 15 |
| 8 | 4 | 0 | 12 | 8 | 0 | 6 | 0 | 12 | 8 | 4 | 0 | 8 | 14 |
| 7 | 3 | 15 | 11 | 7 | 15 | 5 | 15 | 11 | 7 | 3 | 15 | 7 | 13 |
| 6 | 2 | 14 | 10 | 6 | | | 14 | 10 | 6 | 2 | 14 | | |
| 5 | 1 | 13 | 9 | 5 | 7 | 6 | 13 | 9 | 5 | 1 | 13 | 5 | 4 |
| 4 | 0 | 12 | 8 | 4 | 14 | 4 | 12 | 8 | 4 | 0 | 12 | 6 | 12 |
| 3 | 15 | 11 | 7 | 3 | 13 | 3 | 11 | 7 | 3 | 15 | 11 | 5 | 11 |
| 2 | 14 | 10 | 6 | 2 | 12 | 2 | 10 | 6 | 2 | 14 | 10 | 4 | 10 |
| 1 | 13 | 9 | 5 | 1 | | | 9 | 5 | 1 | 13 | 9 | | |
| 0 | 12 | 8 | 4 | 0 | 11 | 10 | 8 | 4 | 0 | 12 | 8 | 9 | 8 |

▓ Resource elements for transmitting demodulation reference signals on antenna ports P (207,208,209, and 210)

▨ Redefined resource elements for transmitting NB-PDSCHs

FIG.8

EP 3 402 265 A1

FIG. 10

**1100**

```
         ┌──────────────┐
         │    Start     │
         └──────────────┘
                │
                ▼
┌──────────────────────────────────────────┐
│                  S1110:                    │
│    Multiplex more than one narrowband      │
│    Internet of Things physical downlink    │
│    channel in the same subframe, wherein   │
│    a minimum granularity for resource      │
│    allocation of the narrowband Internet of│
│  Things physical downlink channels is in a │
│              unit of an EREG               │
└──────────────────────────────────────────┘
                │
                ▼
┌──────────────────────────────────────────┐
│                  S1120:                    │
│       Transmit the downlink subframe       │
└──────────────────────────────────────────┘
                │
                ▼
         ┌──────────────┐
         │     End      │
         └──────────────┘
```

FIG. 11

**1200**

Start

S1210:
Receive a downlink subframe More
than one narrowband Internet of Things
physical downlink channel is multiplexed
in the subframe A minimum granularity
for resource allocation of the narrowband
Internet of Things physical downlink
channels is in a unit of an EREG

S1220:
Extract, from the received downlink
subframe, a narrowband Internet of Things
physical downlink channel for the
user equipment

End

FIG. 12

# EP 3 402 265 A1

## INTERNATIONAL SEARCH REPORT

| International application No. |
| --- |
| **PCT/CN2016/112067** |

### A. CLASSIFICATION OF SUBJECT MATTER

H04W 72/04 (2009.01) i

According to International Patent Classification (IPC) or to both national classification and IPC

### B. FIELDS SEARCHED

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

CNTXT, CNABS, CNKI, VEN: PDCCH, PDSCH, one, resource unit, EREG, ECCE, narrowband, internet of thing, physical, downlink, shared channel, control channel, multiplex, same, sub-frame, enhanced, resource element

### C. DOCUMENTS CONSIDERED TO BE RELEVANT

| Category* | Citation of document, with indication, where appropriate, of the relevant passages | Relevant to claim No. |
| --- | --- | --- |
| Y | CN 103202080 A (HUAWEI DEVICE CO., LTD.), 10 July 2013 (10.07.2013), description, paragraphs [0055]-[0105], and figures 1-10 | 1-32 |
| Y | CN 103312649 A (HUAWEI DEVICE CO., LTD.), 18 September 2013 (18.09.2013), description, paragraphs [0003]-[0010] | 1-32 |
| A | CN 103270715 A (HUAWEI TECHNOLOGIES CO., LTD.), 28 August 2013 (28.08.2013), the whole document | 1-32 |
| A | US 2011310829 A1 (SAMSUNG ELECTRONIC CO., LTD. ), 22 December 2011 (22.12.2011), the whole document | 1-32 |

| ☐ Further documents are listed in the continuation of Box C. | ☒ See patent family annex. |
| --- | --- |

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 16 February 2017 (16.02.2017) | **01 March 2017 (01.03.2017)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **LI, Junjie** Telephone No.: (86-10) **62089562** |
| --- | --- |

Form PCT/ISA/210 (second sheet) (July 2009)

## INTERNATIONAL SEARCH REPORT
### Information on patent family members

| | International application No. |
|---|---|
| | **PCT/CN2016/112067** |

| Patent Documents referred in the Report | Publication Date | Patent Family | Publication Date |
|---|---|---|---|
| CN 103202080 A | 10 July 2013 | WO 2014015557 A1 | 30 January 2014 |
| | | EP 2712254 B1 | 17 August 2016 |
| | | KR 101583580 B1 | 08 January 2016 |
| | | WO 2014015501 A1 | 30 January 2014 |
| | | CN 103202080 B | 13 August 2014 |
| | | JP 2015519014 A | 06 July 2015 |
| | | KR 20150005678 A | 14 January 2015 |
| | | EP 2712254 A1 | 26 March 2014 |
| | | EP 2712254 A4 | 02 July 2014 |
| CN 103312649 A | 18 September 2013 | EP 2827663 A4 | 04 March 2015 |
| | | EP 2827663 A1 | 21 January 2015 |
| | | SG 11201509198Q A | 30 December 2015 |
| | | WO 2013135032 A1 | 19 September 2013 |
| | | US 2015098409 A1 | 09 April 2015 |
| | | CN 103312649 B | 19 August 2015 |
| CN 103270715 A | 28 August 2013 | WO 2014019283 A1 | 06 February 2014 |
| | | KR 20150039813 A | 13 April 2015 |
| | | WO 2014019208 A1 | 06 February 2014 |
| | | WO 2014019276 A1 | 06 February 2014 |
| | | US 2015146669 A1 | 28 May 2015 |
| | | EP 2871796 A1 | 13 May 2015 |
| | | CA 2880651 A1 | 06 February 2014 |
| US 2011310829 A1 | 22 December 2011 | KR 20110138073 A | 26 December 2011 |
| | | WO 2011159135 A2 | 22 December 2011 |
| | | WO 2011159135 A3 | 26 April 2012 |

Form PCT/ISA/210 (patent family annex) (July 2009)